# EUROPÄISCHE PATENTSCHRIFT

(11) **EP 1 497 567 B1**
(45) Veröffentlichungstag und Bekanntmachung des Hinweises auf die Patenterteilung: **07.09.2005**
(21) Anmeldenummer: 03720226.4
(22) Anmeldetag: 19.03.2003
(51) Int. Cl.: F16B 39/24, F16B 43/00

(54) **SELBSTSICHERNDE BEFESTIGUNGSEINRICHTUNG**
SELF-LOCKING FASTENING DEVICE
DISPOSITIF DE FIXATION AUTOBLOQUANT

(30) Priorität: 23.04.2002 DE 20206373 U
(43) Veröffentlichungstag der Anmeldung: 19.01.2005
(73) Patentinhaber: TEXTRON VERBINDUNGSTECHNIK GmbH & Co. OHG, 56567 Neuwied (DE)
(72) Erfinder: ESSER, Josef, 41462 Neuss (DE)
(74) Vertreter: Beck, Alexander
(86) Internationale Anmeldenummer: PCT/DE2003/000932
(87) Internationale Veröffentlichungsnummer: WO 2003/091583

(56) Entgegenhaltungen:
- EP-B- 0 426 895
- DE-B- 1 129 779
- US-A- 302 441
- US-A- 3 332 464
- US-A- 3 390 713

## Beschreibung

Die vorliegende Erfindung betrifft eine selbstsichernde Befestigungseinrichtung mit einer Schraube oder Mutter zum Befestigen wenigstens eines ersten Bauteils an einem anderen Bauteil.

Aus der US 3 332 464 A ist eine solche Befestigungseinrichtung bekannt, welche eine mit einer zentralen Bohrung versehene Beilagsscheibe aufweist, die an einer ihrer beiden Oberflächen mit einem Rippenprofil versehen ist, das sich beim Anziehen der Befestigungseinrichtung derart in oder an der Oberfläche der Schraube fixiert, dass ein selbsttätiges Losdrehen dadurch verhindert wird, und dergestalt federnd ausgebildet ist, dass sie beim Anziehen der Befestigungseinrichtung gegen ihre Federkraft komprimierbar ist, indem sie gewölbt ist, wobei die konkave Seite zum Bauteil und die konvexe Seite zum Schraubenkopf zeigt und wobei das Rippenprofil auf der der Schraube zugewandten Oberfläche im inneren Bereich nahe der Bohrung angeordnet ist.

Aus der DE 1 129 779 B ist eine Schraubensicherung in Form einer Tellerfeder bekannt, welche an der Innen- und Außenseite mit sich radial erstreckenden Zähnen versehen ist und an den Auflagekanten einen von Zähnen freien Rand aufweist.

Ferner ist aus der EP 426 895 B1 eine selbstsichernde Befestigungseinrichtung mit einer beidseitig gerippten Scheibe bekannt.

Die dort beschriebene selbstsichernde Befestigungseinrichtung wirkt, ebenso wie die in der DE 2556985 C2 beschriebenen selbstsichernden Schrauben nur solange als wirksames Sicherungselement, wie eine ausreichende Vorspannkraft in der Schraubverbindung herrscht. Verliert die Verbindung in Folge extremer Setzbeträge ihre Vorspannkraft, so besteht keine Losdrehsicherung mehr. Da die Notwendigkeit des Sicherns vorwiegend bei kurzen Schrauben mit geringer Klemmlänge besteht, ist die Gefahr des Lockerns gross, da die elastische Verlängerung der Schraube bei geringer Klemmlänge ebenfalls gering ist. In solchen Fällen können bereits Setzbeträge von einigen wenigen Zehntel Millimetern zum Vorspannkraftverlust, und damit zur Gefahr des selbsttätigen Losdrehens der Schraubverbindung führen.

Es ist Aufgabe der vorliegenden Erfindung, ein Befestigungselement der eingangs genannten Art dergestalt weiterzubilden, dass der kompensierbare Setzbetrag erheblich grösser, und damit die Gefahr des Vorspannkraftverlusts erheblich geringer wird.

Erfindungsgemäss wird diese Aufgabe durch den Gegenstand des Anspruchs 1 gelöst.

Besonders bevorzugt ist es dabei, dass die Scheibe nur in ihrem äusseren Randbereich in Radialrichtung gewölbt ist, während sie innen plan ist. Auf diese Weise ist infolge der planen Innenauflage gewährleistet, dass auch bei grösserem Vorspannkraftverlust die Rippen an der Scheibenoberseite auf der ganzen Länge der Schraubenauflage mit dem Schraubenkopf in Kontakt bleiben. An der Scheibenunterseite ist dies nicht unbedingt notwendig, da infolge des sehr grossen Reibradius auch beim Auffedern der Scheibe eine ausreichende Sicherungswirkung erhalten bleibt.

Optimale Federeigenschaften ergeben sich dabei, wenn sich der äussere, gewölbte Randbereich nur über die halbe Breite der Scheibe zwischen innerer Bohrung und äusserem Rand erstreckt.

Die vorliegende Erfindung wird im Folgenden anhand der beiden, in den Figuren dargestellten Ausführungsbeispiele näher erläutert. Es zeigt:
Figur 1 eine Beilagscheibe für eine erfindungsgemässe selbstsichernde Befestigungseinrichtung in Querschnittdarstellung; und
Figur 2 eine zweite Ausführungsform für diese Beilagscheibe, ebenfalls in Schnittdarstellung.

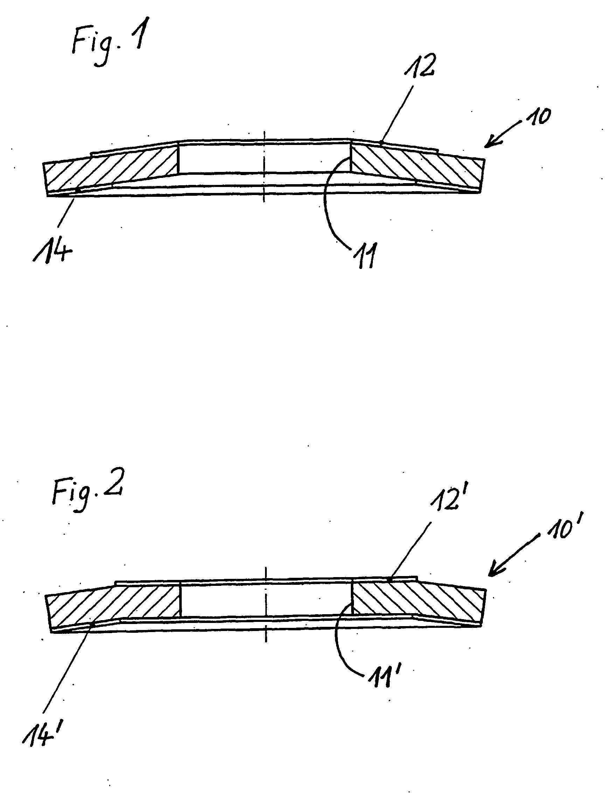

Figur 1 zeigt eine erste Ausführungsform einer erfindungsgemässen Beilagscheibe für eine selbstsichernde Befestigungsvorrichtung. Die Scheibe 10 weist die übliche Form einer Beilagscheibe mit einer zentrischen Bohrung 11 für den Durchtritt eines Gewindeträgers (Bolzen, Schraube) auf. Im Gegensatz zu den üblichen Beilagscheiben ist diese Beilagscheibe jedoch erfindungsgemäss über den Radius von innen nach aussen gewölbt und besteht aus einem hinreichend stark federnden Material.

In Figur 1 ist die Scheibe 10 dergestalt dargestellt, dass der Kopf einer entsprechenden Schraube oder eine entsprechende Mutter oberhalb der Scheibe und das zu befestigende Bauteil unterhalb der Scheibe angeordnet ist. Auf diese Weise ist die Scheibe 10 auf den Kopf der Schraube oder die Mutter hin konvex und auf das Bauteil hin konkav gewölbt. Die im Einsatz dem Schraubenkopf oder der Mutter zugewandte Oberseite der Scheibe 10 ist direkt anschliessend an die zentrische Bohrung 11 bis etwa zwei Drittel der Breite der Scheibe 10 mit einem geeigneten Rippenprofil 12 versehen.

Gleichermassen ist die Unterseite der Scheibe 10, die dem Bauteil zugewandt ist, vom äusseren Rand bis etwa zur Hälfte ihrer Breite ebenfalls mit einem geeigneten Rippenprofil 14 versehen.

Figur 2 zeigt eine weitere Ausführungsform einer erfindungsgemässen Beilagscheibe 10' für eine selbstsichernde Befestigungseinrichtung, wobei die Scheibe 10' in ihrem inneren Bereich, etwa bis zur Hälfte der Breite der Scheibe 10' plan ausgeführt ist, und erst dann radial weiter nach aussen die Wölbung der Scheibe einsetzt. Auf der wiederum dem Schraubenkopf bzw. der Mutter zugewandten oberen Oberfläche der Scheibe 10' ist ein geeignetes Rippenprofil 12' lediglich in dem planen Bereich aufgebracht, während auf der dem Bauteil zugewandten unteren Oberfläche der Scheibe 10' das Rippenprofil 14' lediglich in dem äusseren, gewölbten Bereich angebracht ist.

Die Funktion der selbstsichernden Befestigungseinrichtung ist mit diesen erfindungsgemässen Beilagscheiben 10; 10' dergestalt verbessert, dass die Beilagscheiben 10; 10' beim Anziehen der Befestigungseinrichtung gegen die Federwirkung des Materials der Scheiben 10; 10' plattgedrückt werden. Dabei graben sich die Rippenprofile 12, 14; 12', 14' in das Material des Schraubenkopfes bzw. der Mutter und des Werkstücks ein. Auf diese Weise ist die Befestigungseinrichtung gegen selbsttätiges Losdrehen gesichert, da eine zu grosse Reibung zu überwinden wäre.

Sollte sich die Verbindung jedoch setzen, so federt die erfindungsgemässe Beilagscheibe 10; 10' wieder (teilweise) aus, und die Rippenprofile 12, 14; 12', 14' werden trotz der Setzung noch immer mit ausreichender Kraft sowohl gegen den Schraubenkopf bzw. die Mutter als auch gegen das Bauteil gedrückt. Trotz einer entsprechenden Setzung bleibt erfindungsgemäss die Sicherung gegen ein selbsttätiges Losdrehen erhalten.

Für die vorliegende Erfindung ist es sehr vorteilhaft, wenn die Federkraft der Scheibe möglichst hoch ist. Es ist jedoch nicht unbedingt notwendig, das Rippenprofil auf der gesamten Scheibenoberseite und -unterseite zu prägen. Es reicht durchaus, an der Oberseite von der Bohrung 11 zum Aussendurchmesser hin etwa zwei Drittel der Scheibenauflage mit Rippen 12 zu versehen. Auf der Unterseite genügt es, die Hälfte der Auflagelänge vom Aussendurchmesser zur Bohrung 11 hin mit Rippen 14 zu versehen, wie es in Figur 1 dargestellt ist.

Die Ausführungsform gemäss Figur 2 gewährleistet infolge der planen Innenauflage am Schraubenkopf bzw. an der Mutter, dass bei grösserem Vorspannkraftverlust die Rippen 12' an der Scheibenoberseite immer noch auf der gesamten Länge der Schrauben bzw. Mutternauflage mit dem Schraubenkopf bzw. mit der Mutter in Kontakt bleiben. An der Scheibenunterseite ist dies nicht unbedingt notwendig, da infolge des sehr grossen Reibradius auch beim Auffedern der Scheibe 10' eine ausreichende Sicherungswirkung erhalten bleibt.

## Patentansprüche

1. Selbstsichernde Befestigungseinrichtung mit einer Schraube oder Mutter zum Befestigen wenigstens eines ersten Bauteils an einem anderen Bauteil, wobei die Befestigungseinrichtung eine mit einer zentralen Bohrung (11; 11') versehene Beilagscheibe (10; 10') aufweist, die an ihren beiden Oberflächen mit Rippenprofilen (12, 14; 12', 14') versehen ist, die sich spätestens beim Anziehen der Befestigungseinrichtung derart in oder an den Oberflächen des ersten Bauteils und der Schraube oder Mutter fixieren, dass ein selbsttätiges Losdrehen **dadurch** verhindert wird, und dergestalt federnd ausgebildet ist, dass sie beim Anziehen der Befestigungseinrichtung gegen ihre Federkraft komprimierbar ist, indem sie gewölbt ist, wobei die konkave Seite zum Bauteil und die konvexe Seite zum Schraubenkopf bzw. zur Mutter zeigt, wobei die Rippenprofile (12, 14; 12', 14') auf der der Schraube oder Mutter zugewandten Oberfläche im inneren Bereich nahe der Bohrung (11; 11') und auf der dem Bauteil zugewandten Oberfläche im äusseren Bereich nahe des Aussenrandes angeordnet sind, und sich die Rippenprofile (12, 14; 12', 14') jeweils über die Hälfte bis zwei Drittel der radialen Breite der Beilagscheibe (10; 10') erstrecken.

2. Befestigungseinrichtung nach Anspruch 1, **dadurch gekennzeichnet, dass** die Beilagscheibe (10') nur in ihrem äusseren Randbereich in Radialrichtung gewölbt ist, während sie innen plan ist.

3. Befestigungseinrichtung nach Anspruch 2, **dadurch gekennzeichnet, dass** sich der gewölbte äussere Randbereich nur über die halbe Breite der Beilagscheibe (10') zwischen innerer Bohrung (11') und äusserem Rand erstreckt.

## Claims

1. Self-locking fastening device comprising a screw or nut for fastening at least a first member to another member, wherein the fastening device is provided with a washer (10, 10') having a central bore hole (11, 11') which on the two surfaces thereof is provided with rib profiles (12, 14; 12', 14') which are fixed within or to the surfaces of the first member and the screw or nut no later than the time that the fastening device is tightened such that a self-actuated unscrewing is prevented and is configured in such a resilient manner that it can be compressed counter to its resilience thereof by being cambered, wherein the concave side is facing the member and the convex side is facing the screw head or the nut, respectively, wherein the rib profiles (12, 14; 12', 14') on the surface facing the screw or nut are positioned in the inner area close to the bore hole (11, 11') and on the surface facing the member in the exterior area close to the exterior margin and that the rib profiles (12, 14; 12', 14') each are extending over the half up to two thirds of the radial width of the shim (10; 10').

2. Fastening device according to claim 1, **characterized in that** the shim (10') only in its exterior marginal area is cambered in the radial direction while it is flat in the interior.

3. Fastening device according to claim 2, **characterized in that** the cambered outer marginal area only is extending over the half width of the shim (10') between its inner bore hole (11') and the exterior margin.

## Revendications

1. Système de fixation autobloquant comprenant une vis ou un écrou pour la fixation d'au moins un premier composant sur un autre composant, le système de fixation présentant une rondelle de serrage (10 ; 10') dotée d'un trou (11 ; 11') centré, qui comporte sur ses deux surfaces, des profils nervurés (12, 14 ; 12', 14'), qui se fixent au plus tard lors du serrage du système de fixation, dans ou sur les surfaces du premier composant et de la vis ou de l'écrou de telle sorte qu'un desserrage automatique est empêché de cette façon et est conçue de façon élastique de telle sorte que, lors du serrage du système de fixation, elle peut être comprimée à l'encontre de sa force élastique du fait qu'elle est incurvée, le côté concave étant dirigé vers le composant et le côté convexe vers la tête de la vis ou vers l'écrou, les profils nervurés (12, 14 ; 12', 14') étant disposés sur la surface, tournée vers la vis ou l'écrou, dans la zone intérieure à proximité du trou (11 ; 11') et sur la surface, tournée vers le composant, dans la zone extérieure à proximité du bord extérieur, et les profils nervurés (12, 14 ; 12', 14') s'étendant respectivement sur la moitié jusqu'à deux tiers de la largeur radiale de la rondelle de serrage (10 ; 10').

2. Système de fixation selon la revendication 1, **caractérisé en ce que** la rondelle de serrage (10') n'est incurvée que dans sa zone périphérique extérieure dans le sens radial, alors qu'elle est plane à l'intérieur.

3. Système de fixation selon la revendication 2, **caractérisé en ce que** la zone périphérique extérieure incurvée ne s'étend que sur la demi-largeur de la rondelle de serrage (10') entre le trou intérieur (11') et le bord extérieur.
